Europäisches Patentamt

European Patent Office

Office européen des brevets

(11) Veröffentlichungsnummer: **0 552 859 A1**

# EUROPÄISCHE PATENTANMELDUNG

(21) Anmeldenummer: **93250029.1**

(51) Int. Cl.5: **F16F 1/12**, E04H 9/02

(22) Anmeldetag: **21.01.93**

(30) Priorität: **23.01.92 DE 4201959**

(43) Veröffentlichungstag der Anmeldung:
**28.07.93 Patentblatt 93/30**

(84) Benannte Vertragsstaaten:
**AT BE DE DK ES FR GB GR IT NL PT**

(71) Anmelder: **GERB Schwingungsisolierungen GmbH & Co. KG**
**Roedernallee 174-176, Postfach 51 02 30**

**W-1000 Berlin 51(DE)**

(72) Erfinder: **Weber, Frank-Michael, Dipl.-Phys.**
**Luitpoldstrasse 45**
**W-1000 Berlin 30(DE)**

(74) Vertreter: **Christiansen, Henning, Dipl.-Ing.**
**Patentanwalt Pacelliallee 43/45**
**W-1000 Berlin 33 (DE)**

(54) **Schraubendruckfederanordnung.**

(57) Schraubendruckfederanordnung zur Schwingungsisolierung von stationären Maschinen und zur Sicherung von Bauwerken gegen Erdbebeneinwirkung, deren Enden gegen Querverschiebung gesichert in einem Federteller befestigt sind, wobei zur Verringerung der maximalen Querauslenkung (s) weiterhin in mindestens einem Endbereich (11, 13) der Schraubendruckfeder ein im wesentlichen mittig angeordneter und im wesentlichen rotationssymmetrisch ausgebildeter Führungskörper (2) vorgesehen ist, der sich vom Ende her in Richtung auf das Innere (12) der Schraubendruckfeder (1) erstreckt und bezüglich mindestens einer vom Ende der Schraubendruckfeder (1) zu deren Innerem (12) hin entfernten und dem Führungskörper (2) radial benachbarten Windung (4) mit einem solchen Spiel versehen ist, daß diese Windung (4) zunächst frei verschieblich ist.

Fig. 5

EP 0 552 859 A1

Die Erfindung betrifft eine Schraubendruckfeder der im Oberbegriff des Anspruchs 1 angegebenen Art.

Schraubendruckfedern gehören zu den bei der stationären Schwingungsisolierung eingesetzten Standardbauelementen.

In der Mehrzahl der Anwendungsfälle wird dabei die Elastizität der Schraubendruckfeder in Richtung ihrer Längsachse ausgenutzt. Die Elastizitätswerte in Längsrichtung lassen sich relativ einfach und mit ausreichender Genauigkeit aus der Federgeometrie berechnen.

Die Einsatzbereiche von Schraubendruckfedern lassen sich nach stationären und nicht-stationären Anwendungen unterscheiden.

Während im nicht-stationären Betrieb - bei der Anwendung in Fahrzeugen - derartige Schraubendruckfedern ausschließlich zum Auffangen von im wesentlichen vertikal gerichteten von der Fahrbahn aus einwirkenden Stößen dienen und die in Fahrtrichtung und quer dazu einwirkenden Kräfte durch entsprechende Längs- und Querlenker aufgenommen werden, welche schon aus Gründen der Spurstabilisierung und der Achsführung notwendig sind, tritt im stationären und eine mehr oder weniger starke zusätzliche Verformung durch Kräfte auf, die quer zur Federachse gerichtet sind. Diese Kräfte können bei der Schwingungsisolierung von Maschinen schon durch auf diese einwirkende externe Querkräfte hervorgerufen werden, während bei Erdbeben die Hauptanregungsrichtung ohnehin parallel zur Erdoberfläche - also quer zur Federlängsachse gerichtet ist. Der einzige Widerstand, den die Schraubendruckfeder dabei der seitlichen Auslenkung entgegensetzen kann, ist ihre Eigensteifigkeit in Querrichtung.

Bekanntlich weisen Schraubendruckfedern aus Stahl in erster Näherung auch bei derartigen Querbelastungen eine im wesentlichen lineare Kraft-Weg-Kennlinie auf. Dabei ist es allerdings von Nachteil, daß sich die Querfederrate bzw. die Quersteifigkeit (definiert als das Maß der Federauslenkung quer zur Federachse im Verhältnis zur Größe der die Auslenkung bewirkenden Kraftkomponente) zahlenmäßig nur sehr grob und darüberhinaus auch nur mit einem Fehler in der Größenordnung von bis zu 300% berechnen läßt.

Abgesehen von den ungenügend genauen Berechnungsmethoden, besteht weiterhin noch das Problem, daß die Querfederraten (d.h. die Quersteifigkeit) der Schraubendruckfedern für die meisten Anwendungsfälle zu gering sind. Dies gilt insbesondere für schlanke Schraubendruckfedern, die sich bei einer Belastung senkrecht zur Federachse ausgesprochen labil verhalten und umkippen bzw. umknicken können.

Aus der DE 32 13 031 A1 ist eine Schraubendruckfeder zur elastisch gedämpften Lagerung von Maschinen sowie Bauwerken zur Sicherung gegen Erdbebeneinwirkung bekannt, deren Federenden in einer Ringnut eines Federtellers befestigt sind. Die Festigkeit der Verbindung zwischen den Federenden und dem Federteller ist derart ausgelegt, daß sie die Einspannmomente und Querkräfte der Schraubendruckfeder bei der maximalen Querauslenkung der Federenden ohne umzukippen bzw. umzuknicken aufnehmen kann.

Bei der Ausgestaltung von Federn zur Erdbebensicherung ist die Erkenntnis, daß von der Quer- und Längskraftkomponente der Erdbebenwelle die Querkraftkomponente in den meisten Fällen die größere ist, wichtig. Dies führt, wie bei der aus der DE 32 13 031 A1 bekannten Schraubendruckfeder, zum Einsatz von hohen, schlanken Federn, deren Quersteifigkeiten kleiner sind als deren bereits niedrigen Längssteifigkeiten. Nachteilig hierbei ist aber weiterhin, daß dabei relativ große Verschiebeschwingungen an den zu sichernden Gebäuden bei Erdbebeneinwirkung entstehen, womit die maximale Querauslenkung der Schraubendruckfeder auch relativ groß ist.

Davon ausgehend liegt der Erfindung die Aufgabe zugrunde, eine Schraubendruckfeder der eingangs genannten Gattung durch konstruktiv einfache Maßnahmen derart weiterzubilden, daß deren Querauslenkung bei höheren Querkräften verringert ist.

Diese Aufgabe wird mit den kennzeichnenden Merkmalen des Anspruchs 1 gelöst.

Der Erfindung schließt die Erkenntnis ein, daß auch bei Belastung einer Schraubendruckfeder durch quer zu ihrer Längsachse gerichtete Kraftkomponenten die Zahl der federnden Windungen in direktem Zusammenhang mit der Elastizität der Schraubendruckfeder steht. Werden Teile der Schraubendruckfeder durch geeignete Mittel mechanisch blockiert, so sinkt die Elastizität der Schraubendruckfeder. Damit steigt ihre Querfederrate an, womit sich das Maß der Querauslenkung im Verhältnis zur Querauslenkung bewirkenden Querkraftkomponente verringert.

Nach einer bevorzugten Ausführungsform der Erfindung ist innerhalb des von den Windungen des Federober- bzw. -unterteils der Schraubendruckfeder eingeschlossenen Raums jeweils ein im wesentlichen zylindrisch ausgebildeter Führungskörper angeordnet. Der Außendurchmesser der Führungskörper ist dabei in günstiger Weise um ein geringes Maß kleiner gewählt als der Innendurchmesser der Schraubendruckfeder, um die vertikalen Federeigenschaften nicht zu beeinträchtigen. Bei Beginn einer Querbelastung zeigt die Schraubendruckfeder ihre üblicherweise geringe Quersteifigkeit bis zu dem Zeitpunkt, an dem das entsprechend dem Durchmesserunterschied vorhandene Spiel zwischen Schraubendruckfeder und Führungskörper überwunden worden ist. Durch die nunmehr blockierten Windungen erhöht sich die Querfederrate bei einer weiteren Belastung der Schraubendruckfeder, womit sich auch das Maß der weiteren Querauslenkung der Schraubendruckfeder im Verhältnis zum Maß der weiteren Querkrafterhöhungen verringert.

Um die Spannungsverteilung innerhalb des Federmaterials auszugleichen, ist es weiterhin von Vorteil, den Durchmesser der sich vom jeweiligen Ende der Schraubendruckfeder in Richtung Federzentrum erstreckenden Führungskörper in Erstreckungsrichtung zu verringern.

Nach einer anderen bevorzugten Weiterbildung der Erfindung nimmt der Durchmesser der als rotationssymmetrisch ausgebildeten Führungskörper nichtlinear ab. Es ist dabei besonders günstig, die Durchmesserabnahme in Erstreckungsrichtung der Führungskörper so vorzunehmen, daß deren Außenform der Kontur des sich bei Querbeanspruchung ergebenden Verlaufs der maximalen Erstreckung der Innenseiten der Windungen der frei verformbaren Schraubendruckfeder angepaßt ist. Die Kennlinie der Querfederrate einer mit einem derartigen Führungskörper versehenen Schraubendruckfeder entspricht dabei zunächst derjenigen bei Querauslenkung einer normalen Schraubendruckfeder. Erst nachdem alle im Bereich der Führungskörper befindlichen Windungen der Schraubendruckfeder an der Mantelfläche der Führungskörper anliegen, steigt die Querfederrate sprunghaft an, womit sich auch das Maß der Querauslenkung der Schraubendruckfeder im Verhältnis zur ursächlichen Querkraftkomponente im Vergleich zur Querauslenkung einer normalen Schraubendruckfeder bei gleicher Querkraftkomponente verringert.

Je nach Art und Weise der Verringerung des Durchmessers in Richtung seiner Längsachse sind rotationssymmetrische Führungskörper unterschiedlichster Geometrie herstellbar.

Bei Einsatz dieser Führungskörper sind auf einfache und zugleich vorteilhafte Weise Kennlinien für die Querfederrate von Schraubendruckfedern erzielbar, die besonderen Belastungen der Schraubendruckfedern im jeweiligen Einsatzfall gerecht werden.

Es ist für viele Einsatzfälle wünschenswert, die Geräuschentwicklung der zur Schwingungsisolierung eingesetzten Systeme zu reduzieren. Diesen Forderungen kann zusätzlich dadurch Rechnung getragen werden, daß der Führungskörper aus einem elastischen Kunststoff besteht oder als hohles Bauteil mit geeignet dimensionierter Wandstärke ausgebildet ist.

Die bei den erfindungsgemäßen Schraubendruckfederanordnungen vorgesehenen Führungskörper sind in günstiger Weise mit einer Halterung der Schraubendruckfeder kombiniert und verhindern ihr seitliches Ausweichen in den Befestigungspunkten. Da Aufnahmen für die Enden von Schraubendruckfedern in den meisten Fällen ohnehin erforderlich sind, entstehen durch diese Maßnahmen kaum Mehrkosten.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1    die schematisierte Schnittdarstellung einer Schraubendruckfeder im unbelasteten Zustand und unter Wirkung einer quer zur Federachse gerichteten Kraft,

Figur 2    die Federkennlinie einer mit einer Querkraft belasteten Schraubendruckfeder gemäß Figur 1,

Figur 3    die schematisierte Schnittdarstellung einer Schraubendruckfeder mit eingesetzten Führungskörpern,

Figur 4    die Federkennlinie einer mit einer Querkraft belasteten Schraubendruckfeder gemäß Figur 3,

Figur 5    die schematisierte Schnittdarstellung einer bevorzugten Weiterbildung der Erfindung,

Figur 5a    die schematisierte Schnittdarstellung der Schraubendruckfeder gemäß Figur 5, mit der eine mathematisch optimierte Form des Führungskörpers dargestellt ist,

Figur 6    die Federkennlinie einer mit einer Querkraft belasteten Schraubendruckfeder gemäß Figur 5,

Figur 7    eine weitere Ausführungsform der Erfindung in schematisierter Schnittdarstellung,

Figur 8    die Kennlinie einer mit einer Querkraft belasteten Schraubendruckfeder gemäß Figur 7 sowie

Figur 9    eine Anordnung bei der mehrere Schraubendruckfedern nach der Erfindung zu einer größeren Einheit zusammengefaßt sind.

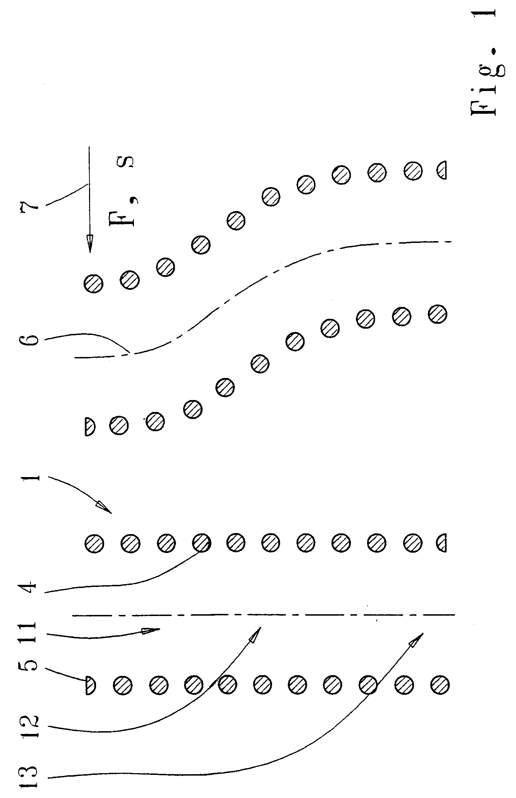

Die in Figur 1 in schematisierter Form dargestellte gerade Schraubendruckfeder 1 besteht aus mehreren federnden Windungen 4 und besitzt an ihrem oberen Endbereich 11 bzw. an ihrem unteren Endbereich 13 jeweils eine Endwindung 5, die an einem nicht dargestellten Federteller anliegen. Wird eine solche Schraubendruckfeder durch eine quer zur Federachse 6 wirkende Kraftkomponente 7 belastet, so erfolgt durch die auch in Querrichtung vorhandene Elastizität der Windungen 4 eine Auslenkung s der Schraubendruckfeder 1 in Richtung der Kraftkomponente 7. Die Mittelachse 6 nimmt dabei die Form der Biegelinie der Schraubendruckfeder 1 an.

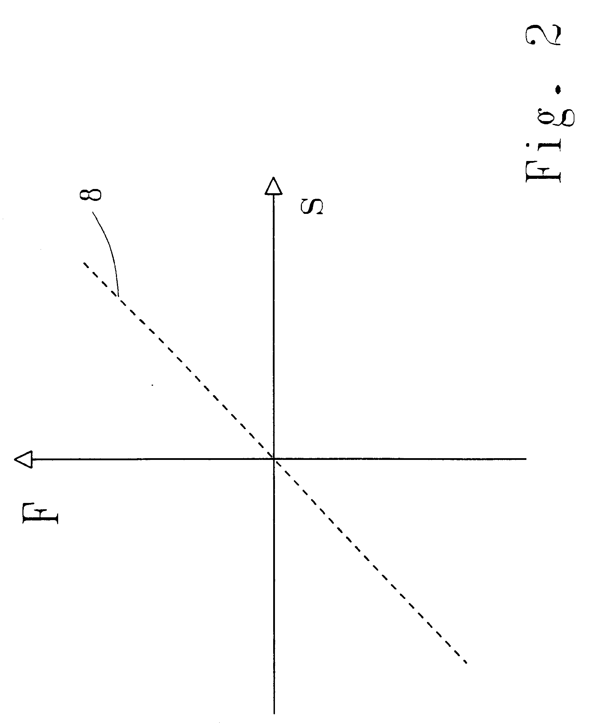

Figur 2 zeigt das entsprechende Kraft-Weg-Diagramm mit der dazugehörigen Federkennlinie 8. Der Anstieg der Federkennlinie 8 entsprechend der Querfederrate der Schraubendruckfeder 1 ist für eine Mehrzahl der Einsatzfälle, insbesondere bei schlanken Ausführungen zu gering, so daß die entsprechenden Schraubendruckfedern in Querrichtung eine zu geringe Stabilität aufweisen.

3

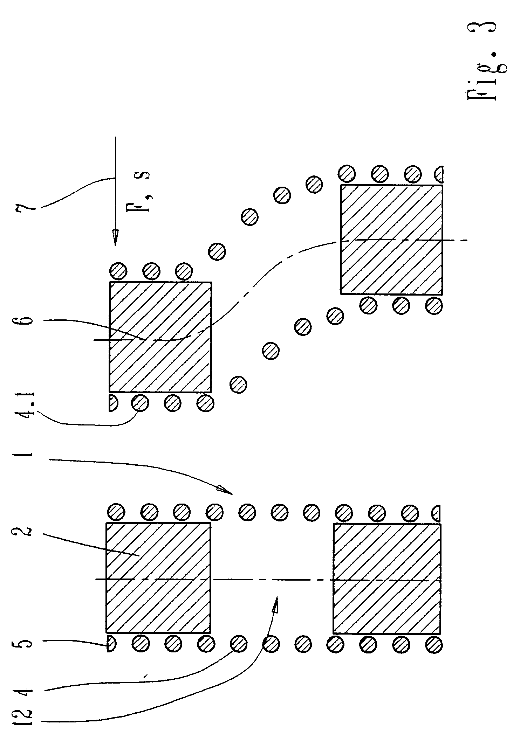

Die in Figur 3 in schematisierter Schnittdarstellung dargestellte Schraubendruckfeder 1 ist mit zwei Führungskörpern 2 ausgerüstet, die sich in dem von den Windungen des oberen Endbereichs bzw. des unteren Endbereichs der Schraubendruckfeder 1 umschlossenen Raum befinden. Die Führungskörper 2 besitzen die Form eines geraden Kreiszylinders, dessen Außendurchmesser geringfügig kleiner ist als der Innendurchmesser der Schraubendruckfeder 1, und sind an nicht dargestellten Federtellern befestigt. Die Führungskörper 2 erstrecken sich in mittiger Anordnung, vom jeweiligen Endbereich der Schraubendruckfeder 1 in Richtung des Schraubendruckfederzentrums 12.

Das gewählte Durchmesserverhältnis verhindert eine Beeinträchtigung der elastischen Eigenschaften der Schraubendruckfeder 1 in axialer Richtung. Wird eine derartig ausgebildete Schraubendruckfederanordnung durch eine senkrecht zur Federachse 6 gerichtete Querkraft 7 belastet, ist die Quersteifigkeit solange gering, bis das Spiel zwischen Schraubendruckfeder 1 und Führungskörper 2 überwunden worden ist. Danach liegen einige Windungen 4.1 an der Mantelfläche des Zylinders 2 an und werden somit blockiert. Dadurch steigt die Federkennlinie 8 bei weiterer Auslenkung aufgrund der erhöhten Querfederrate an, womit sich auch das Maß der weiteren Querauslenkung s relativ zur Erhöhung der Querkraft 7 vermindert.

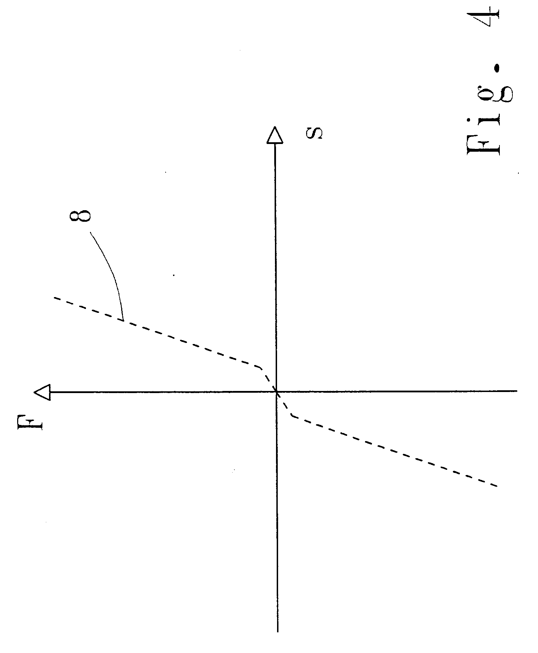

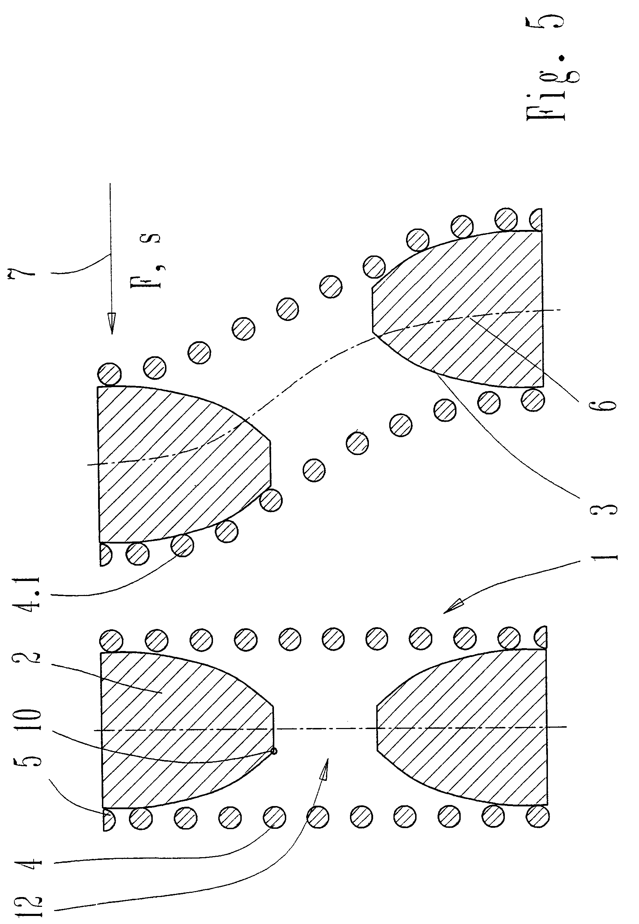

Dieser Zusammenhang ist in schematisierter Form in Figur 4 als Kraft-Weg-Diagramm einer mit zylindrischen Führungskörpern 2 ausgerüsteten Schraubendruckfeder 1 dargestellt. Die Höhe der Querfederrate kann auf einfache Weise durch Vergrößerung oder Verringerung der Zylinderlänge variiert werden, da sich damit auch die Anzahl der durch den Führungskörper 2 blockierbaren Federwindungen 4.1 ändert. Das Maß der Querauslenkung, bei der die Erhöhung der Querfederrate einsetzt, kann dagegen nur in begrenztem Umfang durch eine Variation des Zylinderdurchmessers der Führungskörper 2 verändert werden, da die zu blockierenden Windungen 4.1 bei einer größeren Differenz der Durchmesser von Schraubendruckfeder 1 und Führungskörper 2 nicht mehr an der Mantelfläche des Führungskörpers 2 anliegen.

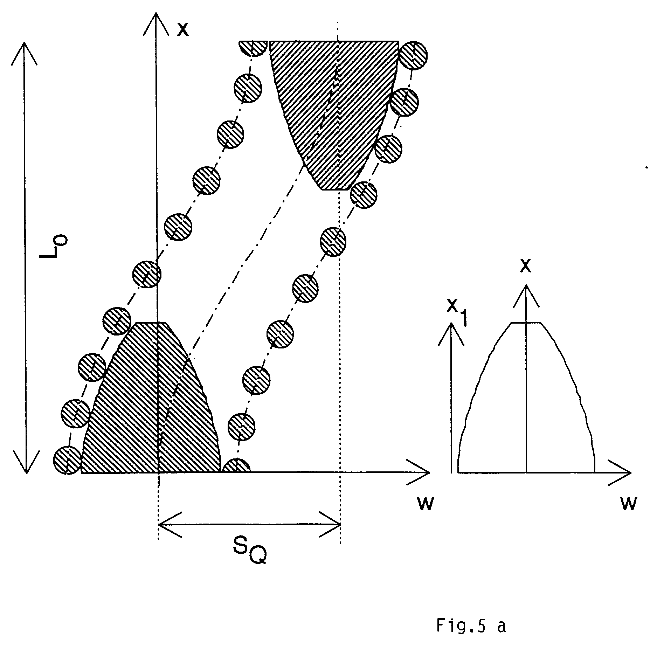

Nach der in Figur 5 gezeigten vorteilhaften Weiterbildung der Erfindung weisen die rotationssymmetrisch ausgebildeten Führungskörper 2 einen in Längsrichtung veränderlichen Durchmesser auf. Der Durchmesser nimmt vom jeweiligen Endbereich der Schraubendruckfeder 1 in Richtung des Schraubendruckfederzentrums 12 nichtlinear ab. Die Durchmesserreduzierung erfolgt in Anlehnung an den Verlauf der Biegelinie einer Schraubendruckfeder ohne Führungskörper (dargestellt in Figur 1). Die Führungskörper 2 weisen dadurch eine im wesentlichen gleichmäßig gewölbte Mantelfläche 3 auf. Durch diese Form der Führungskörper 2 läßt sich auf vorteilhafte Weise bei Querbelastung der Schraubendruckfeder 1 eine gleichmäßigere Verteilung von Spannungen innerhalb des Federmaterials erreichen.

Die Form des Führungskörpers läßt sich dabei in Anlehnung an die Biegelinie eines beidseitig eingespannten Stabes näherungsweise nach folgendem Ausdruck beschreiben:

$$w(x) = S_Q \cdot \left\{ 3 \left[ \frac{x}{L_o} \right]^2 - 2 \left[ \frac{x}{L_o} \right]^3 \right\}$$

wobei $S_Q$ der Querweg, bei dem eine Versteifung der Schraubendruckfeder eintreten soll und $L_o$ die Schraubendruckfederlänge ist. Siehe hierzu auch Figur 5a.

Gibt man also bei einer Schraubendruckfeder der Länge $L_o$ einen Querweg $S_Q$ vor, bei dem eine Versteifung der Schraubenfeder eintreten soll, so sollte der Führungskörper die Form $w(x)$ aufweisen. Die Höhe $x_1$ des Führungskörpers läßt sich aus dem geforderten Anstieg der Querfederrate bestimmen: Ist $R_Q$ die Querfederrate der reinen Schraubendruckfeder und soll mit diesem Führungskörper beim Querweg $S_Q$ eine Querfederrate $R1_Q > R_Q$ erreicht werden, gilt näherungsweise

$$\frac{L_o - 2x_1}{L_o} = \frac{R_Q}{R1_Q}$$

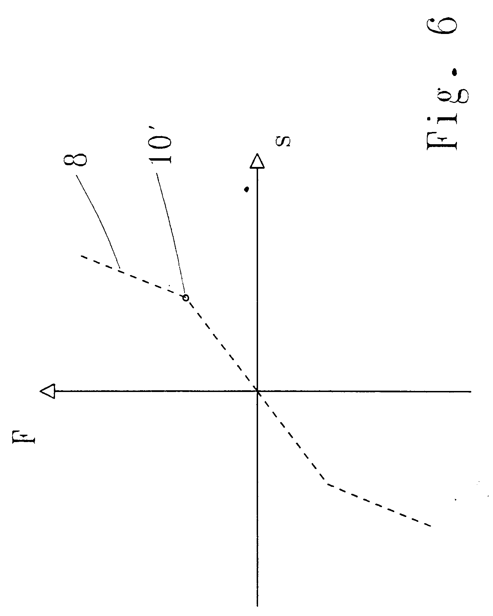

Die Querfederrate der Schraubendruckfeder 1 ist bei einer Querbelastung anfänglich, entsprechend der Querfederrate einer Schraubendruckfeder ohne Führungskörper (Figuren 1 und 2), relativ gering. Erst nachdem die Mantelfläche 3 der Führungskörper 2 vollständig von blockierten Windungen 4.1 der Schraubendruckfeder 1 erfaßt worden ist, steigt die Querfederrate an. Dieser Zustand ist in der rechten Abbildung in Figur 5 dargestellt. Die dazugehörige Federkennlinie 8 zeigt das Kraft-Weg-Diagramm (Figur 6) in vereinfachter Darstellung. Die bei der Federkennlinie 8 im Punkt 10' erkennbare Steigungsänderung wird erreicht, wenn die Führungskörper 2 mit ihren jeweiligen Extrempunkten 10 der Mantelfläche 3 an der Innenseite der Windungen angelangt sind und sämtliche erreichbaren Windungen 4.1 erfaßt haben.

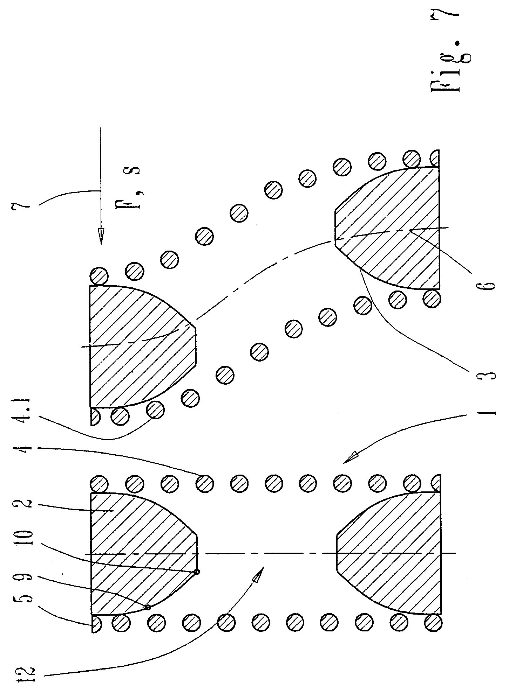

Die für die in Figur 7 dargestellte Weiterbildung der Erfindung benutzten Führungskörper 2 weisen im Vergleich zu den vorstehend beschriebenen Formen der Führungskörper eine jeweils nichtlineare Verringerung ihres Durchmessers auf, welche sich vom oberen bzw. unteren Endbereich der Schraubendruckfeder 1 beginnend in Richtung des Schraubendruckfederzentrums 12 erstreckt. Die Mantelfläche 3 der rotationssymmetrischen Führungskörper 2 ist demzufolge in zwei, ineinander übergehende Bereiche untergliedert. Im ersten Bereich erfolgt die Durchmesserabnahme in Erstreckungsrichtung der Führungskörper 2 im wesentlichen in Form der Biegelinie einer normalen Schraubendruckfeder (vergleiche Figur 1, rechte Abbildung). Der zweite Bereich des Führungskörpers 2 zeichnet sich durch eine, im Verhältnis zum ersten Bereich, stärkere Reduzierung des Durchmessers aus. Der Übergang zwischen den beiden Bereichen des Führungskörpers 2 ist durch den Punkt 9 auf der Mantelfläche 3 gekennzeichnet. Der Führungskörper 2 weist dabei die Form der Federbiegelinie auf, die zur Querauslenkung gehört, bei der die Versteifung der Schraubendruckfeder 1 auftreten soll. Die Höhe des Führungskörpers 2 läßt sich wiederum aus der Gleichung

$$\frac{L_o - 2x_1}{L_o} = \frac{R_Q}{R1_Q}$$

bestimmen.

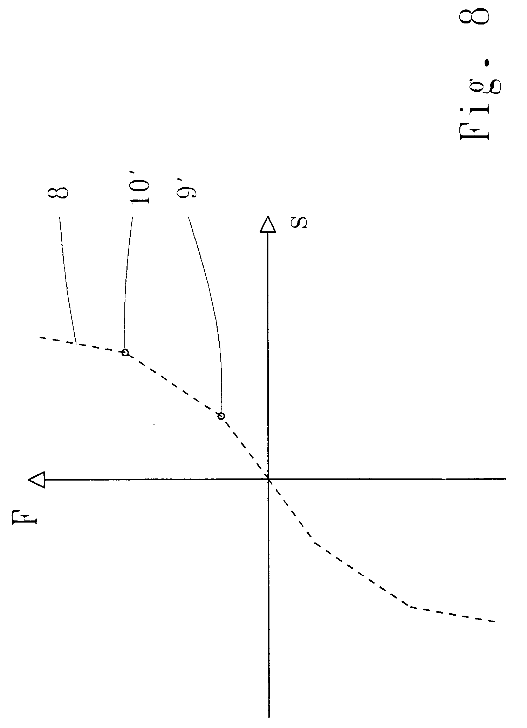

Die aus der dargestellten Gestaltung der Führungskörper 2 resultierende Federkennlinie 8 ist in Figur 8 in vereinfachter Form dargestellt. Zu Beginn der Querauslenkung besitzt die Schraubendruckfeder 1 eine geringe (normale) Querfederrate, wodurch die Auslenkung s auch der einer normalen Schraubendruckfeder 1 entspricht. Diese normale Querfederrate ist solange wirksam, bis die bei weiterer Querauslenkung blockierfähigen Windungen 4.1 an der Mantelfläche des ersten Bereichs des Führungskörpers 2 anliegen (Punkt 9 in Figur 7). Die Federkennlinie 8 besitzt bei diesem Wert der Querauslenkung der Schraubendruckfeder 1 einen Knickpunkt 9', von dem ausgehend die Querfederrate bei weiterer Auslenkung der Schraubendruckfeder 1 vergrößert ist, wodurch sich die weiteren Vergrößerungen der Auslenkung bei erhöhter Querkraft verringern. Dieser Wert der Querfederrate wird mit zunehmender Querauslenkung der Schraubendruckfeder 1 beibehalten, bis das Ende des zweiten Bereichs (Punkt 10 in Figur 7) an den blockierbaren Windungen 4.1 anliegt. Bei diesem Wert der Querauslenkung besitzt die Federkennlinie 8 ihren zweiten Knickpunkt 10' und die Querfederrate steigt erneut an, womit sich auch die relative Vergrößerung der Auslenkung pro Einheit der Querkraft weiter verringert.

Durch Führungskörper mit unterschiedlicher Länge und mehreren Bereichen mit verschiedenartigem Grad der Durchmesserreduzierung lassen sich bei gleichzeitiger Berücksichtigung der Steigung der einzelnen Federwindungen auf einfache Weise die unterschiedlichsten Federkennlinien für die Querauslenkung von Schraubendruckfedern erzeugen. Da mit zunehmendem Querweg immer größere Teile der Schraubendruckfeder blockiert werden, ist die Querfederrate - angepaßt an die Anforderungen des Anwendungsfalls - auch progressiv auslegbar.

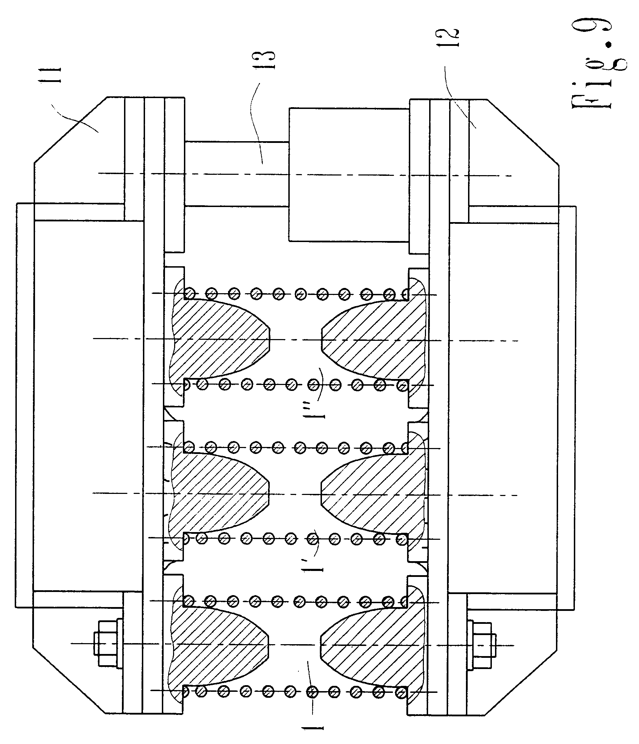

Bei der in Figur 9 dargestellten Anordnung sind mehrere Schraubendruckfedern 1 bis 1'' parallel mit zwei Schalen 11 und 12 zu einer Funktionseinheit zusammengefaßt. Zusätzlich ist noch ein Dämpfer 13 vorgesehen. Die Führungskörper dienen auch zur Halterung der Schraubendruckfedern 1 bis 1''. Die Verbindung kann dabei durch Verschrauben (Feder 1) oder durch Verschweißen (Feder 1') und gegebenenfalls auch durch Verkleben (Feder 1'') erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

**Patentansprüche**

1. Schraubendruckfederanordnung zur Schwingungsisolierung von stationären Maschinen und zur Sicherung von Bauwerken gegen Erdbebeneinwirkung, deren Enden gegen Querverschiebung gesichert in einem Federteller befestigt sind,
   **dadurch gekennzeichnet,**
   daß zur Verringerung der maximalen Querauslenkung (s) weiterhin in mindestens einem Endbereich (11, 13) der Schraubendruckfeder ein im wesentlichen mittig angeordneter und im wesentlichen rotationssymmetrisch ausgebildeter Führungskörper (2) vorgesehen ist, der sich vom Ende her in Richtung auf das Innere (12) der Schraubendruckfeder (1) erstreckt und bezüglich mindestens einer vom Ende der Schraubendruckfeder (1) zu deren Innerem (12) hin entfernten und dem Führungskörper (2) radial benachbarten Windung (4) mit einem solchen Spiel versehen ist, daß diese Windung (4) zunächst frei verschieblich ist.

2. Schraubendruckfederanordnung nach Anspruch 1, **dadurch gekennzeichnet,** daß der Abstand des Führungskörpers (2) zu einem jeweils radial benachbarten Teil der Federwindungen (4) zum Inneren (12) der Schraubendruckfeder (1) hin zunimmt.

3. Schraubendruckfederanordnung nach Anspruch 2, **dadurch gekennzeichnet,** daß die Zunahme des Abstands zwischen dem Führungskörper (2) und einem jeweils radial benachbarten Teil der Federwindungen (4) sich auf eine mittlere Betriebsstellung der Schraubendruckfeder (1) - gegebenenfalls unter Berücksichtigung einer Vorlast - bezieht.

4. Schraubendruckfederanordnung nach einem der Ansprüche 2 oder 3, **dadurch gekennzeichnet,** daß die Zunahme des Abstands zwischen dem Führungskörper (2) und einem jeweils radial benachbarten Bereich der Federwindungen (4) zum Inneren (12) der Schraubendruckfeder (1) hin nichtlinear erfolgt.

5. Schraubendruckfederanordnung nach einem der Ansprüche 3 oder 4, **dadurch gekennzeichnet,** daß die Zunahme des Abstands zwischen dem Führungskörper (2) und einem jeweils radial benachbarten Teil der Federwindungen (4) entsprechend der sich einstellenden Form der Biegelinie einer Schraubendruckfeder (1) unter Schubbeanspruchung in Querrichtung erfolgt.

6. Schraubendruckfederanordnung nach Anspruch 5, **dadurch gekennzeichnet,** daß die Nichtlinearität der Abstandszunahme zum Inneren (12) der Schraubendruckfeder (1) hin zunimmt.

7. Schraubendruckfederanordnung nach einem der vorangehenden Ansprüche, **dadurch gekennzeichnet,** daß der Führungskörper (2) aus Metall oder Kunststoff besteht.

8. Schraubendruckfederanordnung nach einem der vorangehenden Ansprüche, **dadurch gekennzeichnet,** daß der Führungskörper (2) als Hohlteil ausgebildet ist.

9. Schraubendruckfederanordnung nach einem der vorangehenden Ansprüche, **dadurch gekennzeichnet,** daß die beiden einander gegenüberliegenden Führungskörper (2) einer Schraubendruckfeder (1) spiegelsymmetrisch zur mittleren Querebene der Schraubendruckfeder (1) ausgebildet sind.

10. Schraubendruckfederanordnung nach einem der vorangehenden Ansprüche, **dadurch gekennzeichnet,** daß der Führungskörper (2) einstückig mit einer Aufnahme für das Ende der Schraubendruckfeder (1) verbunden ist.

11. Schraubendruckfederanordnung nach einem der vorangehenden Ansprüche, **dadurch gekennzeichnet,** daß mehrere Schraubendruckfedern (1,1',1'') mit Führungskörpern und gegebenenfalls auch mindestens ein Dämpfer (13) in gemeinsamen Schalen (11, 12) zusammengefaßt sind.

EP 0 552 859 A1

13  12  5  11  4  1  6  7

F, s

Fig. 1

Fig. 2

Fig. 3

Fig. 4

EP 0 552 859 A1

Fig. 5

EP 0 552 859 A1

Fig.5 a

Fig. 6

Fig. 7

14

EP 0 552 859 A1

Fig. 8

Fig.9

EP 0 552 859 A1

<table>
<tr><td colspan="4" align="center">

**Europäisches Patentamt**     **EUROPÄISCHER RECHERCHENBERICHT**     Nummer der Anmeldung

EP 93 25 0029

</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 531 069 (DUBBERLEY) <br> * Spalte 2, Zeile 41 - Spalte 5, Zeile 37; Abbildungen * | 1-4,7,10 | F16F1/12 <br> E04H9/02 |
| Y | | 8,9,11 | |
| A | | 5,6 | |
| | --- | | |
| X | US-A-3 854 308 (CZECH ET AL.) <br> * Spalte 3, Zeile 17 - Zeile 67; Abbildungen * | 1,8,10 | |
| | --- | | |
| Y | DE-C-697 877 (HENDEL) <br> * das ganze Dokument * | 8,9 | |
| A | | 1,10 | |
| | --- | | |
| D,Y | DE-A-3 213 031 (GERB GESELLSCHAFT FÜR ISOLIERUNG) <br> * Seite 8, Absatz 4; Abbildung 3 * | 11 | |
| | --- | | |
| A | DE-A-3 517 345 (GRAMMER SITZSYSTEME) <br> * das ganze Dokument * | 2,4 | **RECHERCHIERTE SACHGEBIETE (Int. Cl.5)** |
| | --- | | |
| P,A | US-A-5 090 657 (DREIMAN) <br> * Abbildungen * | 1,2,8-10 | F16F |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 11 MAI 1993 | R. BECKER |